# EUROPÄISCHE PATENTSCHRIFT

(11) **EP 0 972 692 B1**
(45) Veröffentlichungstag und Bekanntmachung des Hinweises auf die Patenterteilung: **27.08.2003**
(21) Anmeldenummer: 99110653.5
(22) Anmeldetag: 02.06.1999
(51) Int. Cl.: B60T 17/22, B60T 11/30, B62L 3/02

(54) **Hydraulische Betätigungseinrichtung**
Actuator for hydraulic device
Dispositif d'actuation hydraulique

(30) Priorität: 14.07.1998 DE 19831527
(43) Veröffentlichungstag der Anmeldung: 19.01.2000
(73) Patentinhaber: Bayerische Motoren Werke Aktiengesellschaft, 80788 München (DE)
(72) Erfinder: Brandl, Raimund, 94405 Landau/Isar (DE); Peters, Hans-Günter, 85283 Wolnzach (DE)

(56) Entgegenhaltungen:
- EP-A- 0 430 835
- DE-A- 3 216 885
- DE-A- 3 935 353
- US-A- 4 474 272
- US-A- 4 479 511
- US-A- 4 785 629

## Beschreibung

Die Erfindung bezieht sich auf eine hydraulische Betätigungseinrichtung, wie sie im Oberbegriff des Hauptanspruchs beschrieben ist.

Das Befüllen derartiger Betätigungseinrichtungen mit Hydraulikflüssigkeit erfolgt in vielen Fällen über den Ausgleichsbehälter des Hydraulikkreislaufes. An dieser Stelle ist in der Regel auch eine Nachlaufbohrung vorgesehen, so daß die Hydraulikflüssigkeit vom Ausgleichsbehälter ungehindert zum Betätigungszylinder zurückfließen kann. Aufgrund dieser Anordnung ergibt sich der Nachteil, daß sich beim Befüllen - das in der Regel unter Vakuum erfolgt - im Leitungssystem Lufteinschlüsse bilden können.

Bei bekannten Motorrädern ist der Ausgleichsbehälter Teil der Handbrems- und Kupplungsarmatur am Motorradlenker. Daraus ergeben sich weitere Nachteile. So kann die Befüllung nur in einer bestimmten Lenkerstellung bzw. Ausrichtung des Ausgleichsbehälters erfolgen. Des weiteren ist der Deckel des Ausgleichsbehälters vor dem Befüllvorgang abzuschrauben und danach wieder zu befestigen. Für den Befüllvorgang als solchen muß aufgrund der Vakuumbefüllung eine große Fläche des geöffneten Ausgleichsbehälters durch die Befüllvorrichtung abgedichtet werden. Insgesamt ist dennoch mit Verschmutzungen der Lenkerarmaturen durch die Hydraulikflüssigkeit zu rechnen.

Die EP-A-0 430 835 schlägt für das Befüllen des Bremsleitungssystems ein Reparatursortiment vor, das neben neuen Bremsschläuchen auch einen Behälter mit Bremsflüssigkeit enthält. Die Behälteröffnung lässt sich über einen Verbindungsschlauch auf das Entlüftungsventil des Bremssattels einer Scheibenbremse des Motorrades aufsetzen und die Bremsflüssigkeit auf diesem Wege in das System einbringen. Das somit als Befüllstutzen dienende Entlüftungsventil muss aber hierfür zunächst gelockert und nach dem Befüllvorgang wieder festgezogen werden.

Aus der US-A-4,474,272 ist ein Radbremszylinder bekannt, der mit einer hydraulischen Flüssigkeit beaufschlagt wird. Zur Entlüftung des Bremskreissystems sieht der Radbremszylinder einen Entlüftungsnippel vor, der über eine federbelastete Kugel geschlossen ist. Dieser Entlüftungsnippel hat bei der eigentlichen Befüllung des Bremskreislaufes mit der hydraulischen Flüssigkeit keine Funktion. Er dient ausschließlich der Entlüftung des Bremssystems nach einer gewissen Betriebsdauer.

### [Aufgabe der Erfindung]

Aufgabe der Erfindung ist es, für eine gattungsgemäße Betätigungseinrichtung eine Befüllmöglichkeit vorzusehen, bei der Lufteinschlüsse weitgehend vermieden werden und die problemlos in der Handhabung ist.

Die Aufgabe wird erfindungsgemäß mit den Merkmalen des Hauptanspruchs gelöst. Vorteilhafte Weiterbildungen der Erfindungen ergeben sich aus den Unteransprüchen.

Nach der Erfindung erfolgt demnach die Befüllung nicht mehr über den Ausgleichsbehälter, sondern über einen Befüllstutzen, der an dem der Kupplung oder Bremse zugeordneten Hydraulikzylinder vorgesehen ist.

Allgemein wird durch die Erfindung das Leitungssystem an einer Stelle befüllt, die entfernt von der Nachlaufbohrung des Ausgleichsbehälters ist. Dadurch wird beim Befüllvorgang die sich in den Leitungen noch befindliche Luft durch die nachströmende Hydraulikflüssigkeit zur Entlüftungsöffnung gedrängt. Lufteinschlüsse treten daher nicht mehr oder nur im weit geringeren Maße auf.

Der Befüllstutzen ist zweckmäßigerweise so ausgelegt, daß eine Befüllvorrichtung sicher und lagegenau aufgesetzt und die Einfüllöffnung von ihm geöffnet werden kann. Für die erste Maßnahme weist der Befüllstutzen an seinem Außenumfang eine Führungsnut auf, für die zweite Maßnahme ist die Einfüllöffnung durch ein Rückschlagventil verschlossen, das bspw. ein Dorn der Einfüllvorrichtung öffnet.

Des weiteren ist es vorteilhaft, neben dem Rückschlagventil die Einfüllöffnung mit einer Stopfbuchse zu verschließen. Damit ist sichergestellt, daß bei einem unbeabsichtigen Abheben des Ventilkörpers bspw. bei Erschütterungen oder bei Mißbrauch keine Hydraulikflüssigkeit nach außen treten kann.

Über den Befüllstutzen läßt sich der Hydraulikkreislauf auch Entlüften. Hierfür ist lediglich ein Entlüftungsventil in die Einfüllbohrung des Befüllstutzens einzuschrauben. Gegebenenfalls ist zuvor die dort befindliche Stopfbuchse zu entfernen. Die Erfindung eignet sich in besonders vorteilhafter Weise für Motorräder, bei denen der Ausgleichsbehälter Teil der am Lenker befestigten Handbrems- und Kupplungsarmatur ist. Der Befüllstutzen ist dann entweder in den Bremssattel eingeschraubt oder dem Nehmerzylinder der Kupplung zugeordnet. In vielen Fällen ist hier ohnehin schon ein Entlüftungsnippel vorgesehen. Durch die Erfindung wird lediglich dieser Entiüftungsnippel durch den Befüllstutzen ersetzt. Ein konstruktive Neugestaltung der betroffenen Bauteil, Bremszange bzw. Nehmerzylinder, ist in diesen Fällen nicht notwendig.

Die Erfindung ermöglicht darüber hinaus eine montagefreundliche Befüllung. Sie ist lageunabhängig von dem Ausgleichsbehälter, und eine Verschmutzung durch austretende Hydraulikflüssigkeit ist weitgehend unterbunden. Durch den gegenüber dem Ausgleichsbehälter verhältnismäßig geringen Einfüllquerschnitt läßt sich die Systemevakuierung verbessern. Und schließlich kann die Einfüllmenge genauer dosiert werden.

### [Beispiele]

Weitere vorteilhafte Ausgestaltungen der Erfindung ergeben sich aus der nachfolgenden Beschreibung eines Ausführungsbeispiels unter Bezugnahme auf die dazugehörige Zeichnung. Es zeigen
- **Fig. 1**: in schematischer Darstellung eine Bremsanlage für ein Motorrad,
- **Fig. 2**: ein Befüllstutzen in vergrößertem Maßstab und perspektivisch dargestellt und
- **Fig. 3**: den Befüllstutzen in nochmals vergrößertem Maßstab und im Halbschnitt.

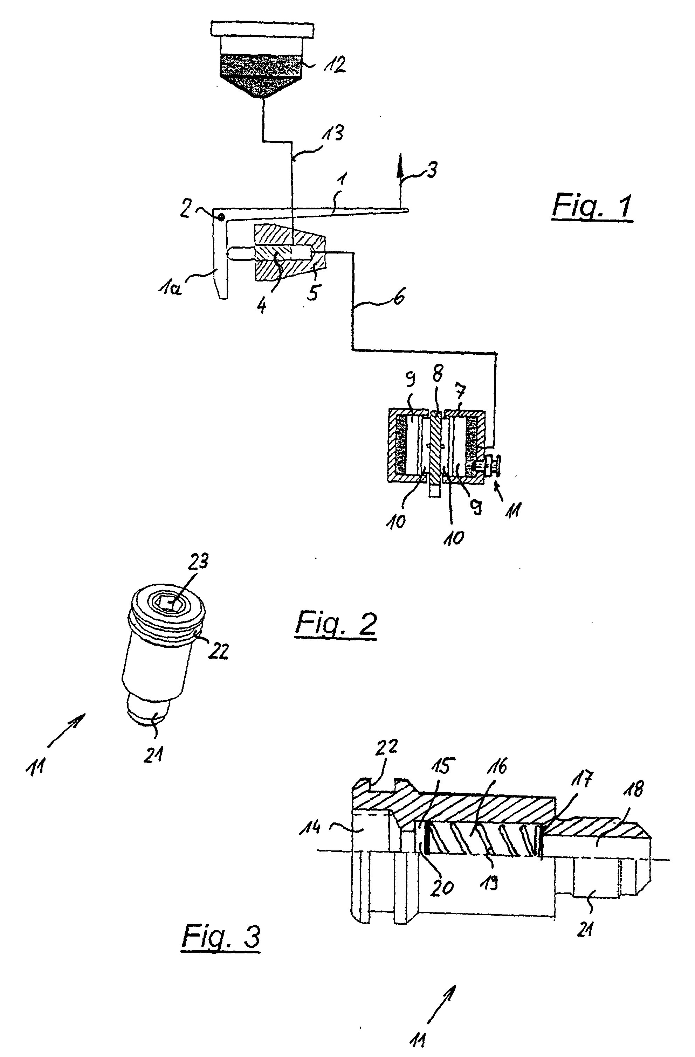

In **Figur 1** sind die für das Verständnis der Erfindung wichtigsten Komponenten einer Bremsanlage eines Motorrades dargestellt. Das Motorrad selbst ist nicht gezeichnet, jedoch ist ein abgewinkelter Handbremshebel 1 erkennbar, der in einem Drehpunkt 2 schwenkbar an dem ebenfalls nicht gezeichneten Lenker des Motorrades gelagert ist. Wird der Handbremshebel 1 in Richtung eines Pfeiles 3 gezogen, drückt sein abgewickeltes Ende la auf einen verschiebbaren Kolben 4 eines Betätigungszylinders 5. Er drückt dabei Bremsflüssigkeit über eine Leitung 6 in einen Hydraulikzylinder 7, der Teil eines nicht näher dargestellten Bremssattels einer Scheibenbremse ist.

Der Hydraulikzylinder 7 umgreift mit zwei Teilzylindern eine Bremsscheibe 8 und in jedem Teilzylinder sind Kolben 9 verschiebbar geführt. Die Bremsflüssigkeit drückt über die Kolben 9 Bremsbeläge 10 gegen die Reibflächen der Bremsscheibe 8. Schließlich weist der Hydraulikzylinder 7 an einem Teilzylinder einen Befüllstutzen 11 auf, der einen Zugang von außen in den Bremskreislauf ermöglicht.

Ein Ausgleichsbehälter 12 versorgt den Betätigungszylinder 5 über eine Leitung 13 mit Bremsflüssigkeit. Dabei ist der Ausgleichsbehälter in Wirklichkeit am Lenker des Motorrades befestigt.

Die **Figuren 2 und 3** zeigen den Befüllstutzen in seinen Einzelheiten. Es ist in der Schnittdarstellung nach Fig. 3 eine mehrfach abgestufte Durchgangsbohrung erkennbar mit einem ersten, im Durchmesser erweiterten und nach außen zeigenden und als Befüllöffnung dienenden Bohrungsabschnitt 14. Daran schließt sich ein radial nach innen zeigender Ringbund 15 an, der wiederum in einen im Durchmesser etwas größeren Bohrungsabschnitt 16 übergeht. Über einen Stufensprung, der als Anschlagschulter 17 ausgelegt ist, geht die Durchgangsbohrung in einen letzten, engeren und in den Bremskreislauf des Hydraulikzylinder 7 mündenden Bohrungsabschnitt 18 über.

Der Bohrungsabschnitt 16 nimmt eine Druckfeder 19 auf, die sich mit ihrem einen Ende an der Anschlagschulter 17 abstützt und mit ihrem anderen Ende eine Ventilplatte 20 gegen die Innenseite des Ringbundes 15 drückt. Damit bilden Ventilplatte 20, Druckfeder 19 und Ringbund 15 zusammen ein Rückschlagventil, das sich nach innen, in Richtung Bremskreislauf öffnen läßt.

Im Bereich des Bohrungsabschnitts 18 hat der Befüllstutzen 11 ein Außengewinde 21, mit dem er in den Hydraulikzylinder 7 eingeschraubt ist. Auf der gegenüberliegenden Seite des Befüllstutzens schließlich ist ebenfalls an der Außenseite eine umlaufende Führungsnut 22 ausgeformt für das Positionieren einer nicht dargestellten Befüllvorrichtung.

Beim Befülllen des Bremskreislaufes wird - wie soeben erwähnt - eine Befüllvorrichtung auf den Befüllstutzen 11 aufgesetzt und ein in der Befüllvorrichtung vorgesehener Dorn öffnet die Ventilplatte 20. Der Bremskreislauf wird sodann evakuiert und danach mit Bremsflüssigkeit befüllt. Nach Abnehmen der Befüllvorrichtung verbleibt der Befüllstutzen im Hydraulikzylinder 7. Zur Sicherung wird jedoch eine Stopfbuchse 23 (siehe Fig. 2) in die Befüllöffnung (Bohrungsabschnitt 14) des Befüllstutzens eingeschraubt.

Bei einem späteren Entlüften des Bremskreislaufes, beispielsweise während eines Werkstattaufenthaltes, wird die Stopfbuchse 23 wieder entfernt und statt dessen ein Entlüftungsventil eingeschraubt, das wiederum die Ventilplatte 20 öffnet. Der Entlüftungsvorgang geschieht dann in der allgemein bekannten Weise.

### [Bezugszeichenliste]

- 1: Handbremshebel
- la: abgewinkeltes Ende
- 2: Drehpunkt
- 3: Pfeil
- 4: Kolben
- 5: Betätigungszylinder
- 6: Leitung
- 7: Hydraulikzylinder
- 8: Bremsscheibe
- 9: Kolben
- 10: Bremsbeläge
- 11: Befüllstutzen
- 12: Ausgleichsbehälter
- 13: Leitung
- 14: Bohrungsabschnitt
- 15: Ringbund
- 16: Bohrungsabschnitt
- 17: Anschlagschulter
- 18: Bohrungsabschnitt
- 19: Druckfeder
- 20: Ventilplatte
- 21: Außengewinde
- 22: umlaufende Führungsnut
- 23: Stopfbuchse

## Patentansprüche

1. Hydraulische Betätigungseinrichtung für die Bremse und/oder die Kupplung eines Motorrades, mit einem Handbrems- und/oder Kupplungshebel für die Beaufschlagung eines der Bremse und/oder der Kupplung zugeordneten Hydraulikzylinders (7) mit einem Befüllstutzen (11) für das Befüllen des Hydraulikkreislaufes und einem an einem Motorradlenker angeordneten Ausgleichsbehälter für die Hydraulikflüssigkeit, **dadurch gekennzeichnet, dass** der Befüllstutzen (11) ein Rückschlagventil enthält, das sich von einer aufgesetzten Befüllvorrichtung öffnen lässt.

2. Betätigungseinrichtung nach Anspruch 1, **dadurch gekennzeichnet, dass** der Befüllstutzen (11) an seinem Außenumfang eine Führungsnut (22) für das Aufsetzen einer Befüllvorrichtung aufweist.

3. Betätigungseinrichtung nach Anspruch 1 oder 2, **dadurch gekennzeichnet, dass** die Befüllöffnung des Befüllstutzens (11) durch eine Stopfbuchse (23) dichtend verschließbar ist.

4. Betätigungseinrichtung nach einem der Ansprüche 1 bis 3, **dadurch gekennzeichnet, dass** der Befüllstutzen (11) eine Entlüftung des Hydraulikkreislaufes erlaubt.

5. Betätigungseinrichtung nach Anspruch 3 und 4, **dadurch gekennzeichnet, dass** nach Entfernen der Stopfbuchse (23) ein Entlüftungsventil auf den Befüllstutzen (11) aufsetzbar ist.

## Claims

1. A hydraulic actuating device for the brake and/or clutch of a motorcycle, comprising a hand-brake and/or clutch lever for actuating a hydraulic cylinder (7) associated with the brake and/or clutch, comprising a filling nozzle (11) for filling the hydraulic circuit and a compensating tank disposed on a motorcycle handlebar for the hydraulic fluid, **characterised in that** the filling nozzle (11) contains a non-return valve which can be opened by attaching a filling device.

2. An actuating device according to claim 1, **characterised in that** the filling nozzle (11) has a guide groove (22) on its outer periphery for attaching a filling device.

3. An actuating device according to claim 1 or claim 2, **characterised in that** the filling opening of the nozzle (11) is closable in sealing-tight manner by a gland (23).

4. An actuating device according to any of claims 1 to 3, **characterised in that** the filling nozzle (11) can be used to vent the hydraulic circuit.

5. An actuating device according to claim 3 or claim 4, **characterised in that** a vent valve can be attached to the filling nozzle (11) after removal of the gland (23).

## Revendications

1. Dispositif d'actionnement des freins et/ou de l'embrayage d'une motocyclette, comprenant un levier de frein à main et/ou d'embrayage servant à actionner un vérin hydraulique (7) associé aux freins et/ou à l'embrayage, une tubulure de remplissage (11) servant à remplir le circuit hydraulique ainsi qu'un réservoir compensateur contenant du fluide hydraulique et monté sur le guidon de la motocyclette,
**caractérisé en ce que**
la tubulure de remplissage (11) contient une soupape antiretour qui peut s'ouvrir quand on place sur la tubulure le dispositif de remplissage.

2. Dispositif selon la revendication 1,
**caractérisé en ce que**
la tubulure de remplissage (11) présente sur sa périphérie externe une rainure de guidage (22) pour la pose d'un dispositif de remplissage.

3. Dispositif selon l'une quelconque des revendications 1 ou 2,
**caractérisé en ce que**
l'orifice de remplissage de la tubulure de remplissage (11) peut être obturé de manière étanche par une douille d'arrêt (23).

4. Dispositif selon l'une quelconque des revendications 1 à 3,
**caractérisé en ce que**
la tubulure de remplissage (11) permet de dégazer le circuit hydraulique.

5. Dispositif selon l'une quelconque des revendications 3 ou 4,
**caractérisé en ce qu'**
une fois la douille d'arrêt (23) retirée, une soupape de dégazage est placée sur la tubulure de remplissage (11).
